(19) Europäisches Patentamt
European Patent Office
Office européen des brevets

(11) Publication number: 0 088 631 B1

(12) **EUROPEAN PATENT SPECIFICATION**

(45) Date of publication of patent specification: **05.03.86**

(51) Int. Cl.$^4$: **A 01 N 47/02,** A 01 N 43/54 // (A01N47/02, 33:12, 43:54, 33:12)

(21) Application number: **83301266.9**

(22) Date of filing: **08.03.83**

(54) **Plant growth regulation method and composition.**

(30) Priority: **10.03.82 GB 8206999**

(43) Date of publication of application:
**14.09.83 Bulletin 83/37**

(45) Publication of the grant of the patent:
**05.03.86 Bulletin 86/10**

(84) Designated Contracting States:
**AT BE CH DE FR GB IT LI NL SE**

(56) References cited:
**EP-A-0 040 050**
**GB-A-1 468 840**

(73) Proprietor: **Lilly Industries Limited**
**Lilly House Hanover Square**
**London W1R 0PA (GB)**

(72) Inventor: **Ryan, Patrick Joseph**
**91, Elliman Avenue**
**Slough Berkshire (GB)**
Inventor: **Jackson, Earl Kenneth**
**12669 Brookshire Parkway**
**Carmel Indiana 46032 (US)**

(74) Representative: **Crowther, Terence Roger et al**
**Erl Wood Manor**
**Windlesham Surrey GU20 6PH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 088 631 B1

**Description**

This invention relates to methods of regulating plant growth, and to compositions for use in that method. The ingredients are known growth regulating agents, but the compositions of the present invention have surprising and improved properties over the respective ingredients, synergism being observed.

The plant growth regulation art has now advanced to a stage in which compounds are available which can cause very specific and selective effects upon the growth and development of certain plants. It is now apparent that synthetic growth-regulating chemicals are becoming extremely important and valuable in the commercial control of crop growth, in both agriculture and horticulture. For example, several agents are now in commercial use which can alter the growth habit of crops such as sugar cane, cotton, potatoes and many others, for example, so as to increase the ease of mechanical harvesting and final yield.

Chlormequat chloride, hereinafter referred to as CCC, is a well known plant growth regulator which shortens stem growth in, for example, wheat and poinsettias. It is fully described in the 6th edition of The Pesticide Manual, published in 1979 by The British Crop Protection Council. The compounds of formula (I) as described hereunder, are known compounds and were disclosed in GB Patent No. 1,468,840, together with their growth regulating properties in crop plants, ornamental plants, woody plants and turf. The compound in which R is $CF_3$ is hereinafter referred to as EL 500.

This invention relates to a method of regulating the growth of a crop which comprises applying to the crop or crop locus from 0.025 to 3.5 kg/ha of a pyrimidinemethanol of formula I

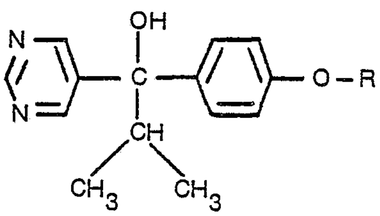

wherein R is $CF_3$, $(CF_2)_2H$ or $C_2F_5$, and from 0.1 to 3.5 kg/ha of CCC. Preferably, the pyrimidinemethanol is applied at from 0.025 to 2.0 kg/ha. The CCC is preferably applied at from 0.1 to 3.0 kg/ha. More preferably, the pyrimidinemethanol is applied at from 0.025 to 0.75 kg/ha whilst that of CCC is from 0.1 to 0.7 kg/ha.

Thus the weight ratio in which the pyrimidinemethanol and CCC are applied lies in the range 1:140 to 35:1. The preferred weight ratio lies in the range 1:120 to 20:1, and more preferably is in the range 1:28 to 7.5:1.

The preferred pyrimidinemethanol of formula I is that in which R is $CF_3$.

The active compounds may be applied sequentially or, preferably, simultaneously. Particularly useful results are obtained when the method is applied to cereal crops, such as barley and wheat, and also oilseed rape. As examples of other crops may be given rice, rye and herbage grasses as well as amenity grass and lawns.

The invention also provides a composition for regulating the growth of a crop which comprises from 1 to 35 parts by weight of a pyrimidinemethanol, preferably EL 500, and from 1 to 135 parts by weight of CCC, the preferred composition having from 1 to 20 parts of pyrimidinemethanol and from 1 to 120 parts of CCC. Thus the weight ratio of pyrimidinemethanol:CCC is in the range 1:140 to 35:1. Preferably the composition comprises a weight ratio of pyrimidinemethanol to CCC of 1:120 to 20:1, most preferably from 1:28 to 7.5:1. A third active component, which may for example be a fungicide such as nuarimol, or a selective herbicide may advantageously be incorporated in the composition.

It is preferred that the composition should also comprise an inert carrier. Other excipients may be incorporated.

The carrier utilized in preparing compositions of the invention may be any inert dry or liquid carrier. In the case of dry carriers, various types may be employed. Typical solid carriers and diluents include clay, diatomaceous earth, sand, talc and synthetic carriers. Dry compositions may be blended and formulated as wettable powders and applied as sprays using water as a vehicle. Alternatively, the dry compositions may be formulated without a wetting agent and applied as a dust or in the form of granules or pellets.

The active ingredients of the composition can also be formulated as ready to dilute aqueous suspensions or oils or emulsifiable concentrates. They can additionally take the form of non-aqueous solutions or suspensions utilizing adjuvants and diluents such as xylene, toluene and acetone.

The formulations will generally contain from 1 to 90% by weight of active ingredient, the so-called concentrates, whether solid or liquid, intended for dilution prior to application, containing from 20 to 95% by weight of active ingredients, the balance being carriers, excipients etc.

The active ingredients of the formula I may be present as the free compounds or in the form of salts or other suitable derivatives, for example, the acid addition salts formed with non-phytotoxic acids such as hydrochloric, hydrobromic, sulphuric, phosphoric, nitric, oxalic, *p*-toluenesulphonic, benzenesulphonic,

methanesulphonic or maleic. It will be understood by those skilled in the art that suitable salts include those which are not substantially more phytotoxic than the free bases from which they are derived.

The invention may usefully be applied to the crops at any time, but the best results on cereals are obtained when applications are made before tillering, before stem elongation and/or at mid stem elongation. In the case of cereal crops application is preferably made once, during mid stem elongation.

The effect of a single application to cereal crops during mid stem elongation has the effect not only of reducing the height of the crop, thus reducing the incidence of lodging and facilitating the harvesting of the crop, but also of concentrating the plant energy into the formation of seeds, thus increasing the crop yield per plant.

The method and compositions of the invention provide a degree of growth regulation which would not be predicted from the teaching of the art. By virtue of the use of the invention, lower amounts of the active ingredients are used to obtain a given degree of growth control than would otherwise have been required.

Although the invention is particularly effective when applied to cereal crops, in particular spring wheat, spring barley and winter barley, other crops may also benefit from the invention. Such other crops include, for example, oilseed rape, rice, ryegrass and other grasses, including amenity grass and lawns. The invention can also be applied with advantage to ornamental crops, such as tulips, chrysanthemum spp, lilies, poinsettias and carnations.

As previously mentioned, sequential or simultaneous application of the active ingredients may be employed. Simultaneous application is preferred and for such purpose it is preferred to employ a combined composition according to the invention after suitable dilution, if appropriate. However, tank mixes may be employed involving separate addition of the active ingredients to a diluent, such as water, to form an appropriate application medium such as a spray liquor, immediately prior to use. For such latter method and also for enabling sequential application to be made, the present invention also provides a two component pack, the pack comprising a first container containing the pyrimidinemethanol, preferably EL 500, and a second container containing CCC, the amounts in each container preferably corresponding to the desired and preferred ratio of the components when used according to the method of the invention.

When the active ingredients are applied sequentially, the applications should be within 4 weeks of each other, but preferably within 5 days and most preferably within 24 hours.

The following Examples illustrate the invention, whilst not limiting it.

## Example 1

Winter oilseed rape (Elvera) was grown in a medium loam with a 2% organic content in 16 cm × 16 cm plastic pots in the open, 10 seeds being hand sown per pot. After 34 days, post-emergence of the crop, the plants were sprayed using a microsprayer with an Allman Number Zero nozzle operating at 2 kg/cm$^2$ with a volume rate of 40 ml/m$^2$ (400 l/ha).

EL 500 was used in the form of a 50% wettable powder and CCC as a 62% aqueous suspension. The rate of application of EL 500 was 0.50 kg/ha while that of CCC was 0.70 kg/ha.

Plants which were treated with a combination of EL 500 and CCC were compared in height with other plants which had not been treated. Simultaneous tests were carried out on plants treated singly with EL 500 or CCC. Height measurements were taken at different periods after treatment, to determine the percentage reduction in crop height of the treated plants as compared with untreated plants. Those plants treated with CCC alone, after 15 days, showed no plant height reduction compared with untreated plants, while those treated with EL 500 alone showed an 87.8% height reduction in the same period. When treated with EL 500 plus CCC, plants showed an 89.6% reduction. At 45 days after treatment the respective figures were 17.2, 82.4 and 93.3 while at 76 days the figures were 1.9, 77.4 and 88.1

The Colby equation, which provides a measure of synergism, is as follows:

$$\text{Expected effect} = X+\frac{Y(100-X)}{100},$$

where X and Y are the individual effects of two treatments. If the effect of the combination of the two treatments is greater than that calculated from the above equation, synergism is observed.

When the Colby equation is applied to the above figures, the expected and observed values are:

| Days after treatment | % Reduction in Crop Height | |
|---|---|---|
| | Expected (Colby) | Observed |
| 15 | 87.8 | 89.6 |
| 45 | 85.4 | 93.3 |
| 76 | 77.8 | 88.1 |

Thus a marked degree of synergism was observed in this experiment.

Example 2

Following the procedure of Example 1, winter oilseed rape was treated 34 days after planting with either (i) 0.70 kg/ha of CCC, (ii) 0.75 kg/ha of EL 500 or (iii) a combination of 0.70 kg/ha of CCC and 0.75 kg/ha of EL 500. Observations made 15, 45 and 76 days after treatment gave the following results.

| Days after treatment | % Reduction in Crop Height | | | |
|---|---|---|---|---|
| | CCC alone | EL 500 alone | CCC + EL 500 | |
| | | | Expected (Colby) | Observed |
| 15 | 0 | 87.8 | 87.8 | 91.3 |
| 45 | 17.2 | 92.6 | 93.8 | 95.8 |
| 76 | 1.9 | 90.6 | 90.7 | 91.5 |

As in Example 1, synergism was observed throughout the growth period.

Example 3

Following the procedure of Example 1, plants of spring wheat were treated 34 days after planting with either (i) 0.25 kg/ha of EL 500 or (ii) 0.7 kg/ha of CCC or (iii) 0.25 kg/ha of EL 500 plus 0.7 kg/ha of CCC. Measurements taken 31 days after treatment and compared with the height of untreated plants gave the following results.

| Crop | % Reduction in Crop Height | | | |
|---|---|---|---|---|
| | CCC alone | EL 500 alone | CCC + EL 500 | |
| | | | Expected (Colby) | Observed |
| Spring Wheat | 24.8 | 18.7 | 38.8 | 47.5 |

A marked degree of synergism was observed.

Example 4

Example 3 was repeated with spring wheat and spring barley, but using an application rate of 0.5 kg/ha of EL 500 with the following results.

| Crop | % Reduction in Crop Height | | | |
|---|---|---|---|---|
| | CCC alone | EL 500 alone | CCC + EL 500 | |
| | | | Expected (Colby) | Observed |
| Spring Wheat | 24.8 | 34.7 | 50.8 | 56.9 |
| Spring Barley | 37.6 | 31.5 | 57.2 | 58.6 |

A small degree of synergism was observed in spring barley, while spring wheat showed it to a marked degree.

Example 5

Example 4 was repeated, but using an application rate of 0.75 kg/ha of EL 500, with the following results.

| Crop | % Reduction in Crop Height | | | |
|---|---|---|---|---|
| | CCC alone | EL 500 alone | CCC + EL 500 | |
| | | | Expected (Colby) | Observed |
| Spring Wheat | 24.8 | 38.0 | 53.3 | 74.0 |
| Spring Barley | 37.6 | 41.7 | 63.6 | 69.8 |

A marked degree of synergism was observed in both spring wheat and barley.

Example 6

Using the procedure of Example 1, plants of spring wheat and spring barley were treated 34 days after planting with either (i) 0.75 kg/ha of EL 500 or (ii) 0.7 kg/ha of CCC or (iii) 0.75 kg/ha of EL 500 plus 0.7 kg/ha of CCC and their heights compared 59 days after treatment with untreated plants. The results were as follows:

| Crop | % Reduction in Crop Height | | | |
|---|---|---|---|---|
| | CCC alone | EL 500 alone | CCC + EL 500 | |
| | | | Expected (Colby) | Observed |
| Spring Wheat | 34.5 | 26.1 | 51.5 | 63.0 |
| Spring Barley | 19.3 | 26 | 40.2 | 46.2 |

A marked degree of synergism was observed.

Example 7

Following the procedure of Example 1, plants of oilseed rape were treated after 34 days with (i) 0.25 kg/ha of EL 500 or (ii) 0.7 kg/ha of CCC or (iii) a combination of the two, and their heights compared 15 days after treatment with untreated plants. The reduction in crop heights are shown in the following table for the different growth periods.

| Crop | % Reduction in Crop Height | | | | |
|---|---|---|---|---|---|
| | Period after Treatment | CCC alone | EL 500 alone | CCC + EL 500 | |
| | | | | Expected (Colby) | Observed |
| Oilseed Rape | 15 days | 0 | 81.7 | 81.7 | 87.8 |

Example 8

Following the procedure of Example 1, plants of spring wheat were treated after 34 days with (i) 0.25 kg/ha of EL 500 or (ii) 0.7 kg/ha of CCC or (iii) a combination of the two, and their heights compared 15 and 45 days after treatment with untreated plants. The reduction in crop heights are shown in the following table for the different growth periods.

| Crop | % Reduction in Crop Height | | | | |
|---|---|---|---|---|---|
| | Period after Treatment | CCC alone | EL 500 alone | CCC + EL 500 | |
| | | | | Expected (Colby) | Observed |
| Spring Wheat | 15 days | 29.1 | 0.9 | 29.7 | 31.8 |
| | 45 days | 27.2 | 25.2 | 45.5 | 46.9 |

Example 9

The procedure of Example 8 was repeated using oilseed rape and spring wheat, but using 0.7 kg/ha of EL 500, with the following results.

| Crop | % Reduction in Crop Height | | | | |
|---|---|---|---|---|---|
| | Period after Treatment | CCC alone | EL 500 alone | CCC + EL 500 | |
| | | | | Expected (Colby) | Observed |
| Oilseed Rape | 15 days | 0 | 87.8 | 87.8 | 97.3 |
| | 45 days | 17.7 | 92.6 | 93.8 | 95.8 |
| Spring Wheat | 15 days | 29.1 | 19.1 | 42.6 | 42.7 |
| | 45 days | 27.2 | 46 | 60.6 | 64.6 |

Example 10

Following the procedure of Example 1, plants of winter wheat were treated 83 or 131 days after planting with (i) EL 500, (ii) CCC or (iii) a combination of the two. The dosage level of EL 500 was varied from 37.5 to 250 gms/ha. Measurements of the plant heights were taken 105 or 57 days after treatment. The reduction in crop height when compared with untreated plants is tabulated below for the combinations tested.

| | | % Reduction in Crop Height | | | |
|---|---|---|---|---|---|
| Days after planting (treatment) | | | 83 | | 131 |
| Days after treatment (observation) | | | 105 | | 57 |
| Compound | Dose gm/ha | Expected | Observed | Expected | Observed |
| EL 500 | 37.5 | | 0 | | 0 |
| | 75 | | 0 | | 1.9 |
| | 125 | | 5.3 | | 4.4 |
| | 250 | | 20.3 | | 7.9 |
| CCC | 700 | | 0.2 | | 5.3 |
| EL 500 + CCC | 37.5 + 700 | 0.2 | 3.6 | 5.3 | 8.7 |
| | 75.0 + 700 | 0.2 | 15.5 | 7.0 | 5.3 |
| | 125.0 + 700 | 5.4 | 28.3 | 9.4 | 24.1 |
| | 250.0 + 700 | 20.4 | 31.7 | 12.7 | 28.8 |

Marked synergism was observed at 7 or the 8 data points where the combination was used.

Overall plant height is a function of the distance between nodes. Assessment was made of the distance between nodes 2 and 3. These nodes were produced after the applications were made.

| | | % Reduction in Distance Between Nodes 2 and 3 | | | |
|---|---|---|---|---|---|
| Days after planting (treatment) | | | 83 | | 131 |
| Days after treatment (observation) | | | 105 | | 57 |
| Compound | Dose gm/ha | Expected | Observed | Expected | Observed |
| EL 500 | 37.5 | | 7.2 | | 0 |
| | 75 | | 0 | | 0 |
| | 125 | | 7.2 | | 7.2 |
| | 250 | | 28.6 | | 14.3 |
| CCC | 700 | | 14.3 | | 28.2 |
| EL 500 + CCC | 37.5 + 700 | 20.5 | 14.3 | 28.2 | 21.4 |
| | 75.0 + 700 | 14.3 | 25.0 | 28.2 | 32.8 |
| | 125.0 + 700 | 20.5 | 46.2 | 33.3 | 50.0 |
| | 250.0 + 700 | 38.8 | 64.3 | 38.4 | 55.6 |

Marked synergism was observed at 6 of the 8 data points where the combination was used.

Example 11

Example 10 was repeated using winter barley. The results are set out in the following tables.

| | | % Reduction in Crop Height | | | |
|---|---|---|---|---|---|
| Days after planting (treatment) | | 83 | | 131 | |
| Days after treatment (observation) | | 105 | | 57 | |
| Compound | Dose gm/ha | Expected | Observed | Expected | Observed |
| EL 500 | 37.5 | | 0 | | 0 |
| | 75 | | 0 | | 0 |
| | 125 | | 0 | | 0 |
| | 250 | | 3.2 | | 0 |
| CCC | 700 | | 0 | | 0 |
| EL 500 + CCC | 37.5 + 700 | 0 | 0 | 0 | 0 |
| | 75.0 + 700 | 0 | 0 | 0 | 0 |
| | 125.0 + 700 | 0 | 4.5 | 0 | 17.2 |
| | 250.0 + 700 | 3.2 | 20.6 | 0 | 12.6 |

| | | % Reduction in Distance Between Nodes 2 and 3 | | | |
|---|---|---|---|---|---|
| Days after planting (treatment) | | 83 | | 131 | |
| Days after treatment (observation) | | 105 | | 57 | |
| Compound | Dose gm/ha | Expected | Observed | Expected | Observed |
| EL 500 | 37.5 | | 0 | | 0 |
| | 75 | | 0 | | 0 |
| | 125 | | 0 | | 0 |
| | 250 | | 0 | | 0 |
| CCC | 700 | | 0 | | 0 |
| EL 500 + CCC | 37.5 + 700 | 0 | 0 | 0 | 0 |
| | 75.0 + 700 | 0 | 0 | 0 | 4.2 |
| | 125.0 + 700 | 0 | 4.2 | 0 | 25.0 |
| | 250.0 + 700 | 0 | 33.3 | 0 | 16.7 |

Marked synergism was observed at 5 of the 8 data points where the combination was used.

For winter wheat the lowest application rate of the combination tested (EL 500 37.5 + chlormequat 700 gm/ha) generally displayed synergism as did higher application rates (13 of 16 data points). The growth stage at which the application was made appeared to be immaterial. For winter barley a generally higher application rate than that which was required for wheat was necessary to reduce crop height. Thus EL 500

at rates equal to or greater than 75 gm/ha in combination with 700 gm/ha chlormequat was synergistic at 9 of 12 occasions. As with wheat, the growth stage of the crop at the time of application appeared to be immaterial.

Example 12

Four seeds of spring barley (variety "Golden Promise") were planted in 10 cm (4") square pots filled with steam sterilized soil. The seeds and soil were covered with 30 ml of medium-sized vermiculite. The pots were lightly sprayed with water and kept in the growth room under a combination of fluorescent and incandescent lights at 235 microeinsteins $m^{-2}$ $sec^{-1}$ at 33°C. The pots were watered daily by sub-irrigation for 10 days, by which time they were at a 2-leaf stage. The plants were thinned to two plants per pot before treatment.

*Compound formulation*

Stock solutions containing 1 mg/ml of CCC and compounds to be tested in combination with CCC were prepared, using 1% Toximul R/Toximul S (1:1) in 1:1 acetone:ethanol as a solvent, and .05% Toximul R/Toximul S (1.5:1) in deionised water was used as a diluent in preparing the test solutions, according to the following table.

| Treatment Rate kg/ha (lb/acre) | Vol. of Test Compound (ml) | Stock Soln. (ml) CCC | Vol. of Diluent (ml) |
|---|---|---|---|
| 0.112 (.1) | .29 | | 8.7 |
| 0.224 (.2) | .57 | | 8.4 |
| 0.448 (.4) | 1.14 | | 7.9 |
| 0.56 (.5) | | 1.43 | 7.6 |
| 1.12 (1) | | 2.86 | 6.1 |
| 0.112 + 0.56 (.1 + .5) | .29 | 1.43 | 7.3 |
| 0.224 + 0.56 (.2 + .5) | .57 | 1.43 | 7.0 |
| 0.448 + 0.56 (.4 + .5) | 1.14 | 1.43 | 6.4 |
| 0.112 + 1.12 (.1 + 1) | .29 | 2.86 | 6.4 |
| 0.224 + 1.12 (.2 + 1) | .57 | 2.86 | 5.9 |
| 0.448 + 1.12 (.4 + 1) | 1.14 | 2.86 | 5.6 |

*Treatment procedure*

Plants were sprayed with a DeVilbiss compressed air sprayer at the rate of 3 ml/pot. All experiments were set up in a randomized block design and replicated three times.

*Data Collection Procedure*

Treated plants were moved to a greenhouse and kept under meta halide lights at 190 microeimsteins $m^{-2}$ $sec^{-1}$ and 29°C. Data were collected on the plants fourteen days after treatment.

Plant height was determined by measuring the plants from the pot edge to the tip of the tallest leaf. Both plants in the pot were measured and the results recorded as an average of the two in centimeters. The data were converted from centimeters to a percent of the average height of the control plants and the percentage reduction in height of the treated plants determined.

The following compounds were tested by this procedure, EL 500 (A), α-isopropyl-α-(p-1,1,2,2-tetrafluoroethoxyphenyl)-5-pyrimidinemethanol (B), and α-isopropyl-α-(p-pentafluoroethoxyphenyl)-5-pyrimidinemethanol (C).

The results of this treatment are set out in the following tables.

| Compound | Dose kg/ha (lb/acre) | % Reduction | |
|---|---|---|---|
| | | Expected | Observed |
| CCC | 0.56 (.5) | | 9.4 |
| | 1.12 (1.0) | | 14.2 |
| EL 500 | 0.112 (.1) | | 12.3 |
| | 0.224 (.2) | | 12.3 |
| | 0.448 (.4) | | 9.4 |
| CCC + EL 500 | 0.56 (.5) 0.112 (0.1) | 20.5 | 21.7 |
| | 0.224 (.2) | 20.5 | 25.0 |
| | 0.448 (.4) | 17.9 | 32.5 |
| | 1.12 (1.0) .112 (0.1) | 24.8 | 21.7 |
| | 0.224 (.2) | 24.8 | 33.0 |
| | 0.448 (.4) | 22.3 | 31.6 |

| Compound | Dose kg/ha (lb/acre) | % Reduction | |
|---|---|---|---|
| | | Expected | Observed |
| CCC | 0.56 (.5) | | 9.4 |
| | 1.12 (1.0) | | 14.2 |
| 'B' | 0.112 (.1) | | 5.2 |
| | 0.224 (.2) | | 1.4 |
| | 0.448 (.4) | | 11.3 |
| CCC + 'B' | 0.56 (.5) 0.112(0.1) | 14.1 | 12.7 |
| | 0.224 (.2) | 10.7 | 17.0 |
| | 0.448 (.4) | 19.6 | 16.0 |
| | 1.12 (1.0) 0.112 (0.1) | 18.7 | 19.3 |
| | 0.224 (.2) | 15.4 | 20.8 |
| | 0.448 (.4) | 23.9 | 27.4 |

| Compound | Dose kg/ha (lb/acre) | % Reduction | |
|---|---|---|---|
| | | Expected | Observed |
| CCC | 0.56 (.5) | | 9.4 |
| | 1.12 (1.0) | | 14.2 |
| 'C' | 0.112 (.1) | | 10.8 |
| | 0.224 (.2) | | 9.9 |
| | 0.448 (.4) | | 12.3 |
| CCC + 'C' | 0.56 (.5) 0.112 (0.1) | 19.2 | 19.3 |
| | 0.224 (.2) | 18.4 | 28.3 |
| | 0.448 (.4) | 20.5 | 30.2 |
| | 1.12 (1.0) 0.112 (0.1) | 23.5 | 33.5 |
| | 0.224 (.2) | 22.7 | 25.9 |
| | 0.448 (.4) | 24.8 | 38.7 |

Example 13

Plants of barley (Golden Promise) were cultivated in 10 cm (4") pots as in Example 12 and the effect of a soil drench on their growth rate was determined. The treatment solutions were prepared by dissolving the active ingredients in a 1:1 acetone:ethanol mixture and diluting with deionized water to prepare a stock solution, which could be diluted as required. The solution volume of the drench was 20 ml in each treatment, which was applied 8 days after planting, and measurements were made 17 days later.

| Compound | Dose kg/ha (lb/acre) | % Reduction | |
|---|---|---|---|
| | | Expected | Observed |
| CCC | 0.56 (.5) | | 13.4 |
| | 1.12 (1.0) | | 12.5 |
| EL 500 | 0.112 (.1) | | 42.7 |
| | 0.224 (.2) | | 50.7 |
| | 0.448 (.4) | | 54.4 |
| CCC + EL 500 | 0.56 (.5) 0.112 (0.1) | 50.4 | 46.5 |
| | 0.224 (.2) | 57.3 | 48.8 |
| | 0.448 (.4) | 60.5 | 51.1 |
| | 1.12 (1) 0.112 (0.1) | 49.8 | 49.2 |
| | 0.224 (.2) | 56.9 | 52.5 |
| | 0.448 (.4) | 60.1 | 53.9 |

Example 14

Plants of Spring Barley (Larker) were grown in the open in rows 15 cm (6") apart in clay soil with small clods. The plants were sprayed after 27 days, using a $CO_2$ Backpack sprayer operating at 1724 mbar (25 psi) using an 8002E Tee Jet nozzle. The plant heights were subsequently measured at various intervals, the results being summarized in the following table, which shows the reduction in plant height of treated plants relative to untreated plants at different periods of time following the treatment.

| No. of Days | % Reduction | | | | |
|---|---|---|---|---|---|
| | CCC | | EL 500 | CCC + EL 500 | |
| | 1.68 kg/ha (1.5 lb/acre) | 3.36 kg/ha (3 lb/acre) | 1.68 kg/ha (1.5 lb/acre) | 1.68+1.68 kg/ha (1.5+1.5 lb/acre) | 3.36+1.68 kg/ha 3+1.5 lb/acre) |
| 33 | 1.8 | 0 | 10.2 | 0.6 | 6.6 |
| 39 | 0 | 0 | 10.7 | 0 | 7.1 |
| 45 | 1.5 | 0 | 7.7 | 4.6 | 7.7 |
| 55 | 1.5 | 0 | 7.7 | 4.6 | 7.7 |

Example 15

Example 15 was repeated with Spring Barley (Larker) planted on clay soil with no clods. The backpack sprayer was operated at 2068 mbar (30 psi). The results are shown in the following table.

| No. of Days | % Reduction | | | | |
|---|---|---|---|---|---|
| | CCC | | EL 500 | CCC + EL 500 | |
| | 1.68 kg/ha (1.5 lb/acre) | 3.36 kg/ha (3 lb/acre) | 1.68 kg/ha (1.5 lb/acre) | 1.68+1.68 kg/ha (1.5+1.5 lb/acre) | 3.36+1.68 kg/ha 3+1.5 lb/acre) |
| 45 | 7.9 | 0 | 4.8 | 1.6 | 0 |
| 55 | 7.9 | 0 | 4.8 | 1.6 | 0 |

Example 16

Winter Barley (Pike) was planted in the open in rows 15 cm (6") apart in the autumn. One application of a growth regulator formulation was made, in spring, using a $CO_2$ backpack sprayer operating at 1379 mbar (20 psi), and using an 8002E Tee Jet nozzle. The plant heights were measured and compared with untreated plants after 13 and 30 days. The formulation compositions and calculated growth reduction, as a percentage of the control plants, are shown in the following table.

| No. of Days | % Reduction | | | | | |
|---|---|---|---|---|---|---|
| | CCC kg/ha (lb/acre) | | | EL 500 kg/ha (lb/acre) | CCC + EL 500 kg/ha (lb/acre) | |
| | 1.12(1) | 2.24(2) | 3.36(3) | 1.68 (1.5) | 1.68 + 1.68 (1.5 + 1.5) | 3.36 + 1.68 (3 + 1.5) |
| 13 | 4.7 | 4.7 | 1.8 | 3.0 | 1.3 | 6.4 |
| 30 | 2.6 | 7.1 | 4.3 | 1.5 | 1.5 | 5.4 |

Formulations containing the active ingredients were prepared as in the following Examples.

Example 17

The following ingredients were carefully blended in conventional mixing equipment, to provide a wettable powder.

| | % by wt. |
|---|---|
| EL 500 | 1 |
| CCC | 28 |
| Sodium dioctyl sulphosuccinate | 5 |
| Naphthalene/formaldehyde condensate | 3 |
| Precipitated silicon dioxide | 25 |
| Kaolin | to 100 |

Example 18

Example 17 was repeated, using the following make-up of ingredients:

| | % by wt. |
|---|---|
| EL 500 | 45 |
| CCC | 6 |
| Sodium dioctyl sulphosuccinate | 5 |
| Naphthalene/formaldehyde condensate | 3 |
| Precipitated silicon dioxide | 15 |
| Kaolin | to 100 |

In the following Examples, suspension concentrates were prepared having the constituents indicated.

Example 19

| | % w/v |
|---|---|
| EL 500 | 2 |
| CCC | 56 |
| Ethylene oxide/propylene oxide block copolymer | 3 |
| Lignin sulphonate | 5 |
| Ethylene glycol | 10 |
| Silicone antifoam emulsion | 0.5 |
| Xanthan gum | 0.1 |
| Water | to 100 |

Example 20

| | % w/v |
|---|---|
| EL 500 | 45 |
| CCC | 6 |
| Ethylene oxide/propylene oxide block copolymer | 3 |
| Lignin sulphonate | 5 |
| Ethylene glycol | 10 |
| Silicone antifoam emulsion | 0.5 |
| Xanthan gum | 0.5 |
| Water | to 100 |

**Claims**

1. A method of regulating the growth of a crop which comprises applying to the crop or crop locus where the regulation is desired from 0.025 to 3.5 kg/ha of a pyrimidinemethanol of formula I

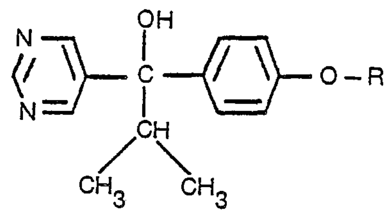

wherein R is $CF_3$, $(CF_2)_2H$ or $C_2F_5$, or an acid addition salt thereof and from 0.1 to 3.5 kg/ha of chlormequat chloride (CCC).

2. A method according to claim 1 wherein the pyrimidine-methanol is applied at from 0.025 to 2.0 kg/ha and CCC from 0.1 to 3.0 kg/ha.

3. A method according to claim 1 or claim 2 wherein R is $CF_3$.

4. A method according to any one of claims 1 to 3 wherein the weight ratio of the pyrimidinemethanol to CCC is in the range of 1:28 to 7.5:1.

5. A method according to any one of claims 1 to 4 wherein the pyrimidinemethanol and the CCC are applied simultaneously.

6. A method according to any one of claims 1 to 5 wherein the crop is spring wheat, spring barley or winter barley.

7. A method according to any one of claims 1 to 6 wherein the crop is treated during mid-stem elongation.

8. A method according to any one of claims 1 to 7 wherein the crop is treated by foliar application.

9. A plant growth regulator composition which copmrises from 1 to 35 parts by weight of a pyrimidinemethanol as defined in claim 1 and from 1 to 135 parts by weight of CCC.

10. A composition according to claim 9 which comprises from 1 to 20 parts by weight of a pyrimidinemethanol and from 1 to 120 parts by weight of CCC.

11. A composition according to claim 9 or claim 10 wherein the pyrimidinemethanol is α-isopropyl-α-(*p*-trifluoromethoxyphenyl)-5-pyrimidinemethanol.

12. A composition according to any one of claims 9 to 11 in which the weight ratio of pyrimidinemethanol to CCC in in the range of 1:28 to 7.5:1.

13. A composition according to any one of claims 9 to 12 which also comprises an inert carrier.

14. A method according to any one of claims 1 to 8 which comprises applying a composition according to any one of claims 9 to 13.

**Patentansprüche**

1. Verfahren zur Regulierung des Pflanzenwachstums von Fruchtpflanzen, welches die Anwendung von 0.025 bis 3.5 kg/ha eines Pyrimidinmethanols der Formel I

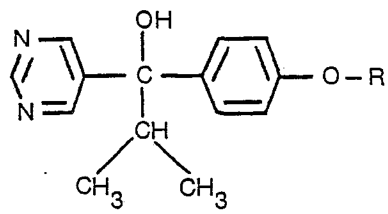

worin R $CF_3$, $(CF_2)_2H$ oder $C_2F_5$ ist, oder eines Säureadditionssalzes davon und von 0.1 bis 3.5 kg/ha von Chlormequatchlorid (CCC) auf die Fruchtpflanze oder den Anbauort der Fruchtpflanze, an dem die Regulierung erwünscht ist, umfaßt.

2. Verfahren nach Anspruch 1, worin das Pyrimidinmethanol mit 0.025 bis 2.0 kg/ha und das CCC mit 0.1 bis 3.0 kg/ha angewandt wird.

3. Verfahren nach Anspruch 1 oder 2, worin R $CF_3$ ist.

4. Verfahren nach einem der Ansprüche 1 bis 3, worin das Gewichtsverhältnis des Pyrmidinmethanols zum CCC im Bereich von 1:28 bis 7.5:1 liegt.

5. Verfahren nach einem der Ansprüche 1 bis 4, worin das Pyrimidinmethanol und das CCC gleichzeitig angewandt werden.

6. Verfahren nach einem der Ansprüche 1 bis 5, worin die Fruchtpflanze Sommerweizen, Sommergerste oder Wintergerste ist.

7. Verfahren nach einem der Ansprüche 1 bis 6, worin die Fruchtpflanze während des Mitthalm-Längenwachstums behandelt wird.

8. Verfahren nach einem der Ansprüche 1 bis 7, worin die Fruchtpflanze durch Anwendung auf das Laub behandelt wird.

9. Zusammensetzung zur Regulierung des Pflanzenwachstems, welche 1 bis 35 Gewichtsteile eines Pyrimidinmethanols, wie in Anspruch 1 definiert, und 1 bis 135 Gewichtsteile CCC umfaßt.

10. Zusammensetzung nach Anspruch 9, welche 1 bis 20 Gewichtsteile eines Pyrimidinmethanols und 1 bis 120 Gewichtsteile CCC umfaßt.

11. Zusammensetzung nach Anspruch 9 oder Anspruch 10, worin das Pyrimidinmethanol α-Isopropyl-α-(*p*-Trifluormethoxyphenyl)-5-Pyrimidinmethanol ist.

12. Zusammensetzung nach einem der Ansprüche 9 bis 11, worin das Gewichtsverhältnis von Pyrimidin-methanol zu CCC im Bereich von 1:28 bis 7.5:1 liegt.

13. Zusammensetzung nach einem der Ansprüche 9 bis 12, welche auch einen inerten Träger umfaßt.

14. Verfahren nach einem der Ansprüche 1 bis 8, welches die Anwendung einer Zusammensetzung nach einem der Ansprüche 9 bis 13 umfaßt.

**Revendications**

1. Procédé de régulation de la croissance d'une récolte, caractérisé en ce qu'il consiste à appliquer, à la récolte ou au locus de celle-ci où la régulation est désirée, 0,025 à 3,5 kg/ha d'un pyrimidine-méthanol de formule I

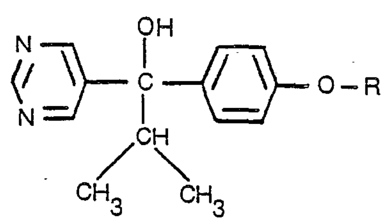

dans laquelle R représente $CF_3$, $(CF_2)_2H$ ou $C_2F_5$, ou un de ses sels d'addition d'acide, ainsi que 0,1 à 3,5 kg/ha de chlorure de chlormequate (CCC).

2. Procédé selon la revendication 1, caractérisé en ce qu'on applique le pyrimidine-méthanol à raison de 0,025 à 2 kg/ha et le CCC, à raison de 0,1 à 3,0 kg/ha.

3. Procédé selon la revendication 1 ou 2, caractérisé en ce que R représente $CF_3$.

4. Procédé selon lune quelconque des revendications 1 à 3, caractérisé en ce que le rapport pondéral entre le pyrimidine-méthanol et le CCC se situe dans l'intervalle allant de 1:28 à 7,5:1.

5. Procédé selon l'une quelconque des revendications 1 à 4, caractérisé en ce que le pyrimidine-méthanol et le CCC sont appliqués simultanément.

6. Procédé selon l'une quelconque des revendications 1 à 5, caractérisé en ce que la récolte est le blé de printemps, l'orge de printemps ou l'orge d'hiver.

7. Procédé selon l'une quelconque des revendications 1 à 6, caractérisé en ce que le récolte est traitée à la moitié de l'allongement des tiges.

8. Procédé selon l'une quelconque des revendications 1 à 7, caractérisé en ce que la récolte est traitée par application sur les feuilles.

9. Composition régulatrice de la croissance des plantes, caractérisé en ce qu'elle contient 1 à 35 parties en poids d'un pyrimidine-méthanol du type défini dans la revendication 1, ainsi que 1 à 135 parties en poids de CCC.

10. Composition selon la revendication 9, caractérisée en ce qu'elle contient 1 à 20 parties en poids d'un pyrimidine-méthanol, ainsi que 1 à 120 parties en poids de CCC.

11. Composition selon la revendication 9 ou 10, caractérisée en ce que le pyrimidine-méthanol est 1' α-isopropyl-α-(p-trifluorométhoxyphényl)-5-pyrimidine-méthanol.

12. Composition selon l'une quelconque des revendications 9 à 11, caractérisée en ce que le rapport pondéral entre le pyrimidine-méthanol et le CCC se situe dans l'intervalle allant de 1:28 à 7,5:1.

13. Composition selon l'une quelconque des revendications 9 à 12, caractérisée en ce qu'elle contient également un support inerte.

14. Procédé selon l'une quelconque des revendications 1 à 8, caractérisé en ce qu'il consiste à appliquer une composition selon l'une quelconque des revendications 9 à 13.